(19) Europäisches Patentamt / European Patent Office / Office européen des brevets

(11) **EP 2 757 068 B1**

(12) **FASCICULE DE BREVET EUROPEEN**

(45) Date de publication et mention de la délivrance du brevet:
**06.03.2024 Bulletin 2024/10**

(21) Numéro de dépôt: **14151103.0**

(22) Date de dépôt: **14.01.2014**

(51) Classification Internationale des Brevets (IPC):
**C01B 25/45** *(2006.01)* **B82Y 30/00** *(2011.01)*
**H01M 4/58** *(2010.01)*

(52) Classification Coopérative des Brevets (CPC):
**H01M 4/5825; B82Y 30/00; C01B 25/45;**
C01P 2002/72; C01P 2004/03; C01P 2004/20;
C01P 2004/54; C01P 2004/64; C01P 2006/12;
C01P 2006/40; Y02E 60/10

(54) **Procédé de synthèse d'un composé LiM1-x-y-zNyQzFexPO4 et son utilisation comme matériau d'électrode pour accumulateur au lithium**

Syntheseverfahren einer LiM1-x-y-zNyQzFexPO4-Verbindung, und ihre Verwendung als Elektrodenmaterial für einen Lithium-Akkumulator

Method for synthesising a LiM1-x-y-zNyQzFexPO4 compound and use thereof as electrode material for a lithium battery

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.01.2013 FR 1350399**

(43) Date de publication de la demande:
**23.07.2014 Bulletin 2014/30**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **Raboin, Lorraine**
  **57160 Scy-Chazelles (FR)**
• **Gutel, Thibaut**
  **38113 Veurey-Voroize (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
WO-A1-2012/147766     CN-A- 102 838 102
US-A1- 2009 117 020     US-A1- 2012 021 288

• HONGMEI JI ET AL: "General synthesis and morphology control of LiMnPO4 nanocrystals via microwave-hydrothermal route", ELECTROCHIMICA ACTA, ELSEVIER SCIENCE PUBLISHERS, BARKING, GB, vol. 56, no. 9, 30 mars 2011 (2011-03-30), pages 3093-3100, XP002671633, ISSN: 0013-4686, DOI: 10.1016/J.ELECTACTA.2011.01.079 [extrait le 2011-01-28]
• MINDONG CHEN ET AL: "Self-assembly of highly uniform LiFePO4 hierarchical nanostructures by surfactant molecules in a new mixture medium", IONICS, vol. 18, no. 6, 1 juin 2012 (2012-06-01), pages 541-547, XP055076026, ISSN: 0947-7047, DOI: 10.1007/s11581-012-0703-2
• CHEN ET AL: "The hydrothermal synthesis and characterization of olivines and related compounds for electrochemical applications", SOLID STATE IONICS, NORTH HOLLAND PUB. COMPANY. AMSTERDAM; NL, NL, vol. 178, no. 31-32, 3 December 2007 (2007-12-03), pages 1676-1693, XP022388037, ISSN: 0167-2738, DOI: 10.1016/J.SSI.2007.10.015

EP 2 757 068 B1

## Description

L'invention concerne un procédé de fabrication d'un composé de formule $LiM_{1-x-y-z}N_yQ_zFe_xPO_4$, et le composé ainsi obtenu.

Elle concerne également un procédé de fabrication d'un matériau composite comprenant ce composé et du carbone, le matériau composite ainsi obtenu, ainsi qu'une électrode comprenant ce matériau composite, et un accumulateur au lithium comprenant une telle électrode.

Les accumulateurs au lithium comportent au moins deux électrodes à base de matériaux actifs différents, et un électrolyte au travers duquel les cations $Li^+$ ont la possibilité de migrer d'une électrode à l'autre en fonction de l'utilisation.

Ces accumulateurs au lithium sont de plus en plus utilisés comme sources d'énergie autonome, en particulier, dans les équipements portables, où ils remplacent progressivement les accumulateurs au nickel-cadmium (Ni-Cd) et nickel-hydrure métallique (Ni-MH). Depuis quelques années, les ventes d'accumulateurs Li-ion dépassent celles des accumulateurs Ni-MH et Ni-Cd. Cette évolution s'explique par l'amélioration continue des performances des accumulateurs au lithium, leur conférant ainsi des densités d'énergie massiques et volumiques nettement supérieures à celles proposées par les filières Ni-Cd et Ni-MH. Alors que les premiers accumulateurs Li-ion possédaient une densité d'énergie d'environ 85 Wh/kg, près de 200 Wh/kg peuvent désormais être obtenus (densité d'énergie rapportée à la masse de la cellule Li-ion complète). A titre de comparaison, les accumulateurs Ni-MH plafonnent à 100 Wh/kg et les accumulateurs Ni-Cd ont une densité d'énergie de l'ordre de 50 Wh/kg. Les nouvelles générations d'accumulateurs au lithium sont déjà en voies de développement pour des applications toujours plus diversifiées (automobile hybride ou tout électrique, stockage de l'énergie de cellules photovoltaïques, ...).

Les composés actifs d'électrodes utilisés dans les accumulateurs commerciaux sont, pour l'électrode positive, des composés lamellaires tels que $LiCoO_2$, $LiNiO_2$ et les composés mixtes $Li(Ni, Co, Mn, Al)O_2$ ou des composés de structure spinelle de composition proche de $LiMn_2O_4$. L'électrode négative est généralement du carbone (graphite, coke,...) ou éventuellement le composé de structure spinelle $Li_4Ti_5O_{12}$ ou un métal formant un alliage avec le lithium (Sn, Si, ...). Les capacités spécifiques théoriques et pratiques des composés d'électrode positive cités sont respectivement d'environ 275 mAh/g et 140 mAh/g pour les oxydes de structure lamellaire ($LiCoO_2$ et $LiNiO_2$) et 148 mAh/g et 120 mAh/g pour le spinelle $LiMn_2O_4$. Dans tous les cas, un potentiel de fonctionnement par rapport au lithium métallique voisin de 4 Volts est obtenu.

Depuis l'émergence des accumulateurs au lithium, plusieurs générations de matériaux d'électrode positive ont successivement fait leur apparition. Le concept d'insertion/extraction de lithium dans/depuis des matériaux d'électrodes a été étendu il y a quelques années aux structures tridimensionnelles construites à partir d'entités polyanioniques de type $XO_n^{m-}$ (X = P, S, Mo, W... ; $2 \le n \le 4$ ; $2 \le m \le 4$). Les phosphates métalliques lithiés de structure cristallographique du type olivine et de formule générale $LiMPO_4$ (M = Fe, Mn, Co, Ni) suscitent d'ailleurs actuellement un réel engouement.

Parmi les quatre composés de formule $LiMPO_4$, seul le phosphate de fer lithié $LiFePO_4$ est actuellement capable de répondre expérimentalement aux attentes, eu égard à une capacité pratique désormais proche de la valeur théorique ; à savoir 170 mAh/g. Néanmoins, ce composé, mettant en exergue le couple électrochimique $Fe^{3+}/Fe^{2+}$, fonctionne à 3,4 V vs. $Li^+/Li$. Ce potentiel peu élevé conduit au maximum à une densité d'énergie massique de 580 Wh/kg de $LiFePO_4$. En revanche, il est connu que les phosphates de manganèse, de cobalt et de nickel, isotypes de $LiFePO_4$, présentent des potentiels d'extraction/insertion des ions lithium plus élevés, respectivement 4,1 V, 4,8 V et 5,1 V vs. $Li^+/Li$. Les capacités spécifiques théoriques de ces trois composés sont proches de celle de $LiFePO_4$.

La formation d'un composé mixte de formule $LiM_{1-x}Fe_xPO_4$ ($0 \le x \le 1$) obtenu par substitution du fer par des métaux de transition de type Mn, Co et Ni offre de nouvelles perspectives. De tels matériaux sont prometteurs car ils présentent des potentiels de fonctionnement plus élevés que le phosphate de fer lithié en gardant des capacités spécifiques théoriques équivalentes. En revanche, d'un point de vue expérimental, d'importants progrès demeurent à réaliser afin d'atteindre des valeurs de capacités spécifiques pratiques satisfaisantes.

Hongmei et al. (Electrochimica Acta 2011, 56(9), 3093-3100) divulgue une électrode ainsi qu'un accumulateur Li-ion comprenant un composé de formule LiMnPO4. Ce composé diffère cependant du composé de formule (I) tel que revendiqué.

Mindong Chen et al. (Ionics 2012, 18(6), 541-547) et la demande CN 102838102 divulguent une électrode ainsi qu'un accumulateur Li-ion comprenant un composé de formule LiFePO4. Ce composé diffère cependant du composé de formule (I) tel que revendiqué.

US 2012/021288 et WO 2012/147766 décrivent notamment des procédés de préparation de composés phosphate mixtes. Cependant, ces procédés diffèrent de celui revendiqué, ainsi que les composés obtenus, de par leur forme notamment.

US 2009/117020 décrit notamment des composés de formule $Li_xFe_{1-y}M_yPO_4$ avec x compris entre 0 et 1 ou entre 0 et 1,2, et y entre 0 et 1, mais ne divulgue pas spécifiquement les composés de l'invention revendiquée.

Chen et al. (Solid State Ionics 2007, 178(31-32), 1676-1693) divulgue notamment le composé $LiFe_{0,5}Mn_{0,5}PO_4$.

Ce document ne décrit cependant pas les composés revendiqués, et notamment leur morphologie.

En résumé, afin de répondre aux demandes en énergie toujours plus importantes (par unité de masse et/ou de volume), de nouveaux matériaux d'électrodes d'accumulateurs Li-ion encore plus performants sont indispensables.

L'invention vise à résoudre ce problème en proposant une méthode de synthèse de composés du type phosphate mixte lithié ayant une morphologie particulière permettant une conductivité améliorée, une faible polarisation électrochimique et une capacité spécifique élevée, qui puisse être utilisé en tant que matériau d'électrode, en particulier positive, dans des accumulateurs au lithium commerciaux.

La méthode de synthèse de l'invention est une méthode rapide mise en oeuvre à basse température.

A cet effet, l'invention propose un procédé de fabrication d'un composé de formule I suivante :

$$LiM_{1-x-y-z}N_yQ_zFe_xPO_4 \qquad \text{formule I}$$

dans laquelle :

- M est un élément de transition choisi parmi Co, Ni et Mn,
- N est un élément dopant différent de M et Q, et/ou une lacune sur les sites du lithium et/ou de M et/ou de Q et/ou de P et/ou de O,
- Q est un élément de transition choisi parmi Co, Ni, Mn et Fe mais différent de M,
- 

$$0,2 \leq x \leq 0,6,$$

- 

$$0 \leq y \leq 0,15,$$

- 

$$z = 0,$$

et

- 

$$0 < x + y + z < 1,$$

caractérisé en ce le composé de formule I a une surface spécifique supérieure ou égale à 15 m$^2$/g, et en ce qu'il comprend les étapes suivantes :

a) mélange des précurseurs de Li, M, N, Fe, P et d'acide ascorbique dans un solvant aqueux contenant de préférence un composé glycol,
b) chauffage par microondes du mélange obtenu à l'étape a) à une température comprise entre 100 et 300 °C, de préférence à une température de 160°C et sous une pression comprise entre 0,5 et 50 bars, de préférence une pression de 3 bars, pendant une durée comprise entre 1 et 60 minutes, de préférence une durée de 30 minutes, et
c) lavages à l'éthanol et à l'eau du produit obtenu à l'étape b).

De préférence, ces lavages consistent en un lavage à l'éthanol, suivi de deux lavages à l'eau.

Dans le composé de formule I, l'élément dopant N est de préférence le bore ou l'aluminium ou des mélanges de bore et d'aluminium.

De préférence à l'étape a), le composé glycol est de l'éthylène glycol et/ou du diéthylène glycol et/ou du triéthylène glycol et/ou du tétraéthylène glycol.

De préférence, à l'étape a), le solvant aqueux comprend un composé glycol et le rapport en volume eau/composé glycol est compris entre 9 et 1/9, de préférence est égal à 1/4.

Egalement de préférence, à l'étape a), la quantité d'acide ascorbique est comprise entre 0,01% et 0,5% en poids, par rapport à la quantité de Fe.

Toujours de préférence, à l'étape a), le précurseur de Li est choisi parmi un hydroxyde, un acétate, un nitrate, un chlorure, un hydrogénophosphate de lithium, de préférence est l'hydroxyde de lithium monohydrate.

Encore de préférence, à l'étape a), les précurseurs de Mn, Fe, Ni et Co sont choisis parmi un sulfate, un acétate, un oxalate, un chlorure, un hydroxyde et un nitrate de respectivement Mn, Fe, Ni et Co, de préférence le précurseur de Fe est du sulfate de fer heptahydrate (FeSO$_4$.7H$_2$O), le précurseur de manganèse est le sulfate de manganèse mono-hydrate (MnSO$_4$.H$_2$O), le précurseur de Ni est le sulfate de nickel hexahydrate, le précurseur de Co est le sulfate de cobalt heptahydrate.

A nouveau de préférence, à l'étape a), le précurseur de phosphore est choisi parmi l'acide phosphorique

(H$_3$PO$_4$), l'hydrogénophosphate de diamonium ((NH$_4$)$_2$HPO$_4$), le dihydrogénophosphate d'ammonium (NH$_4$H$_2$PO$_4$), de préférence est l'acide phosphorique (H$_3$PO$_4$).

Dans un mode de mise en oeuvre préféré, à l'étape a), on mélange les précurseurs de M, N, Q, Fe et P en les quantités stoechiométriques de M, N, Q, Fe et P voulues dans le composé de formule I final et le précurseur de Li en une quantité de Li supérieure à la quantité stoechiométrique de Li voulue dans le composé de formule I final.

De préférence, on utilisera une quantité de Li correspondant à 3 équivalents, en moles, pour obtenir un équivalent en mole de Li dans le composé de formule I final.

L'invention propose également un procédé de fabrication d'un matériau composite de formule II suivante :

$$\text{C-LiM}_{1-x-y-z}\text{N}_y\text{Q}_z\text{Fe}_x\text{PO}_4 \qquad \text{formule II}$$

dans laquelle :

- M est un élément de transition choisi parmi Co, Ni et Mn,
- N est un élément dopant différent de M et Q, et/ou une lacune sur les sites du lithium et/ou de M et/ou de P et/ou de O, en mol,
- Q est un élément de transition choisi parmi Co, Ni, Mn et Fe mais différent de M, en mol,
- 
$$0{,}2 \le x \le 0{,}6,$$

- 
$$0 \le y \le 0{,}15,$$

- 
$$z = 0,$$

et

- 
$$0 < x + y + z < 1,$$

caractérisé en ce qu'il comprend les étapes suivantes :

    a) mélange des précurseurs de Li, M, N, Fe, P et d'acide ascorbique dans un solvant aqueux contenant de préférence un composé glycol,

    b) chauffage par microondes du mélange obtenu à l'étape a) à une température comprise entre 100 et 300 °C, de préférence à une température de 160°C et sous une pression comprise entre 0,5 et 50 bars, de préférence une pression de 3 bars, pendant une durée comprise entre 1 et 60 minutes, de préférence une durée de 30 minutes,

    c) lavages à l'éthanol et à l'eau du produit obtenu à l'étape b), et

    d) mélange du composé de formule I obtenu à l'étape c) avec du carbone en poudre ayant une surface spécifique supérieure à 700m$^2$/g.

Dans la formule II, comme dans la formule I, l'élément dopant N est de préférence du bore ou de l'aluminium ou des mélanges de ceux-ci.

A l'étape a), le composé glycol est, de préférence, de l'éthylène glycol et/ou du diéthylène glycol et/ou du triéthylène glycol et/ou du tétraéthylène glycol.

L'invention propose aussi une électrode caractérisée en ce qu'elle comprend un composé de formule I tel que défini ci-dessus et/ou un matériau composite de formule II tel que défini ci-dessus.

L'invention propose encore un accumulateur Li-ion caractérisé en ce qu'il comprend une électrode telle que définie ci-dessus.

L'invention propose également un composé de formule I suivante :

$$\text{LiM}_{1-x-y-z}\text{N}_y\text{Q}_z\text{Fe}_x\text{PO}_4 \qquad \text{formule I}$$

dans laquelle :

- M est un élément de transition choisi parmi Co, Ni et Mn,
- N est un élément dopant différent de M et Q, et/ou une lacune sur les sites du lithium et/ou de M et/ou de P et/ou de O,
- Q est un élément de transition choisi parmi Co, Ni, Mn et Fe mais différent de M,

$$0{,}2 \leq x \leq 0{,}6,$$

$$0 \leq y \leq 0{,}15,$$

$$z = 0,$$

et

$$0 < x + y + z < 1,$$

obtenu par le procédé de synthèse de l'invention, ayant une surface spécifique supérieure ou égale à 15 m$^2$/g, et ayant la forme de plaquettes dont deux dimensions sont comprises entre 20 nm et 500 nm et dont l'épaisseur est comprise entre 1 et 100 nm.

L'invention propose finalement un matériau composite de formule II suivante :

$$C\text{-}LiM_{1\text{-}x\text{-}y\text{-}z}N_yQ_zFe_xPO_4 \qquad \text{formule II}$$

dans laquelle :

- M est un élément de transition choisi parmi Co, Ni et Mn,
- N est un élément dopant différent de M et Q, et/ou une lacune sur les sites du lithium et/ou de M et/ou de P et/ou de O,
- Q est un élément de transition choisi parmi Co, Ni, Mn et Fe mais différent de M,
- 

$$0{,}2 \leq x \leq 0{,}6,$$

- 

$$0 \leq y \leq 0{,}15,$$

- 

$$z = 0,$$

et
- 

$$0 < x + y + z < 1,$$

caractérisé en ce qu'il comprend un composé de formule I selon l'invention et du carbone et en ce qu'il a une surface spécifique supérieure ou égale à 80m$^2$/g.

De préférence, dans le composé de formule I, comme dans le composé de formule II, l'élément dopant N est de l'aluminium ou du bore ou des mélanges de ceux-ci.

L'invention sera mieux comprise et d'autres caractéristiques et avantages de celle-ci apparaîtront plus clairement à la lecture de la description explicative qui suit et qui est faite en référence aux figures dans lesquelles :

- la figure 1 montre les diagrammes de diffraction X ($\lambda_{CuK\alpha}$) des composés de formule LiMnPO$_4$ (hors invention), LiMn$_{0{,}5}$Fe$_{0{,}5}$PO$_4$ (invention) et LiFePO$_4$ (hors invention) préparés selon l'exemple 1. En insert, la structure cristalline de LiMnPO$_4$ est représentée dans le plan (a, b) ; l'axe c étant perpendiculaire au plan de la figure,
- la figure 2 est un agrandissement du pic de diffraction à $2\theta = 25°$ des diagrammes de diffraction des rayons X des composés de formule LiMn$_{1\text{-}x}$Fe$_x$PO$_4$ avec x=0 (hors invention), 0,2 (invention), 0,4 (invention), 0,6 (invention), 0,8 (hors invention) et 1 (hors invention), respectivement, préparés par le procédé de l'invention,
- la figure 3 représente l'image obtenue par microscopie électronique à balayage (MEB-FEG) du matériau LiMn$_{0{,}5}$Fe$_{0{,}5}$PO$_4$ (invention) préparé selon l'exemple 1, à un grossissement de 200 000,
- la figure 4 représente l'image obtenue par microscopie électronique à balayage (MEB-FEG) du matériau composite C-LiMn$_{0{,}5}$Fe$_{0{,}5}$PO$_4$ (invention) préparé selon l'exemple 1, à un grossissement de 100 000,

- la figure 5 représente l'image obtenue par microscopie électronique à balayage (MEB-FEG) du matériau $LiMnPO_4$ (hors invention) préparé à l'exemple 1, à un grossissement de 200 000,
- la figure 6 représente l'image obtenue par microscopie électronique à balayage (MEB-FEG) du matériau composite $LiFcPO_4$ (hors invention) obtenu à l'exemple 1, à un grossissement de 100 000,
- la figure 7 représente l'image obtenue par microscopie électronique à balayage (MEB-FEG) du matériau $C-LiMnPO_4$ (hors invention) obtenu à l'exemple 1, à un grossissement de 100 000,
- la figure 8 représente l'image obtenue par microscopie électronique à balayage (MEB-FEG) du matériau composite $C-LiFePO_4$ (hors invention) obtenu à l'exemple 1, à un grossissement de 100 000,
- la figure 9 est un graphique représentant les premier et cinquième cycles de charge / décharge en mode intentiostatique (régime de C/10 ; 20°C) du matériau composite $C-LiMn_{0,5}Fe_{0,5}PO_4$ (15% en masse de carbone, invention), obtenu à l'exemple 1, entre 2,5 et 4,5V,
- la figure 10 représente les courbes de charge / décharge des cinquièmes cycles de charge / décharge en mode intentiostatique (régime de C/10 ; 20°C) des matériaux composites $C-LiMnPO_4$ (hors invention), $C-LiMn_{0,5}Fe_{0,5}PO_4$ (invention) et $C-LiFePO_4$ (hors invention) (15% en masse de carbone), obtenus à l'exemple 1, entre 2,5 et 4,5V,
- la figure 11 représente l'évolution de la capacité spécifique en décharge en fonction du nombre de cycles à un régime de C/10 à 20°C et 55°C effectués avec le matériau composite $C-LiMn_{0,5}Fe_{0,5}PO_4$ (invention), obtenu à l'exemple 1, entre 2,5 et 4,5V, et
- la figure 12 montre l'évolution du potentiel de fonctionnement et de la capacité spécifique en décharge à un régime de C/10 à 20°C des matériaux composites $C-LiMn_{1-x}Fe_xPO_4$ (invention) en fonction de la valeur de X.

L'invention vise à fournir un procédé de fabrication de matériaux pour électrode positive pour accumulateur au lithium, en particulier.

Ces matériaux sont de type $LiM_{1-x}Fe_xPO_4$ (M = Co, Ni, Mn avec $0.2 \leq x \leq 0.6$). En particulier, le phosphate mixte de manganèse et de fer de formule $LiMn_{1-x}Fe_xPO_4$ (invention), et de structure olivine, présente un très grand intérêt comme matériau actif d'électrode positive en raison de son potentiel de fonctionnement relativement élevé mais restant compatible avec les électrolytes conventionnels. Le potentiel est compris entre 3,4 V ($LiFePO_4$) et 4,1 V ($LiMnPO_4$) vs. $Li^+/Li$ associé à une capacité spécifique théorique de l'ordre de 170 mAh/g. D'un point de vue théorique, ce composé possède ainsi une densité d'énergie supérieure à la plupart des matériaux d'électrode connus (jusqu'à 700 Wh/kg).

Néanmoins, les capacités pratiques des composés $LiMn_{1-x}Fe_xPO_4$ rapportées dans la littérature restent en deçà des valeurs théoriques attendues. De plus, il n'est pas déterminé de manière claire quel ratio de manganèse et de fer serait optimal dans ces matériaux en termes de performances électrochimiques, et dans quelle mesure les composés mixtes $LiMn_{1-x}Fe_xPO_4$ sont stables en tant que cathodes dans des batteries Li-ion. Le potentiel redox du couple $Fe^{2+}/Fe^{3+}$ dans les composés de structure olivine étant 600-700 mV plus faible que pour le couple $Mn^{2+}/Mn^{3+}$, il est important d'optimiser le ratio Mn/Fe dans $LiMn_{1-x}Fe_xPO_4$ pour assurer le maximum de capacité dans le domaine de potentiel le plus élevé. Il s'agit d'allier avantageusement les qualités des couples $LiFePO_4/FePO_4$ (meilleure conductivité électronique et ionique) et $LiMnPO_4/MnO_4$ (densité d'énergie supérieure).

Une méthode de synthèse spécifique conduisant à l'obtention d'un composite carbone/phosphate mixte lithié $[C-LiMn_{1-x}Fe_xPO_4]$ de morphologie particulière permettant une conductivité améliorée, une faible polarisation électrochimique et une capacité spécifique élevée, est indispensable pour réellement envisager l'utilisation future de ce matériau dans des accumulateurs au lithium commerciaux.

Le procédé de synthèse du composé de formule I est effectué par synthèse solvothermale assistée par micro-ondes.

Ce procédé comprend les étapes suivantes :

a) mélange des précurseurs de Li, M, N, Fe, P et d'acide ascorbique dans un solvant aqueux contenant de préférence un composé glycol, tel que l'éthylène glycol, et/ou le diéthylène glycol, et/ou le triéthylène glycol, et/ou le tétraéthylène glycol,

b) chauffage par microondes du mélange obtenu à l'étape a) à une température de 160°C et sous une pression comprise entre 0,5 et 50 bars, de préférence une pression de 3, pendant une durée comprise entre 1 et 60 minutes, de préférence une durée de 30, et

c) lavages à l'éthanol et à l'eau du produit obtenu à l'étape b).

Les composés qui peuvent être obtenus par ce procédé peuvent être des composés du type $LiM_{1-x}Fe_xPO_4$ ou M représente un élément de transition choisi parmi Co, Ni, Mn et Fe.

On peut également synthétiser un composé contenant deux éléments de transition, c'est-à-dire un composé du type $Li_{1-x-z}N_yQ_z$, $N_yFe_xPO_4$ où M et N sont choisis parmi Co, Ni, Mn et Fe mais sont différents l'un de l'autre.

On peut ainsi obtenir par exemple un composé du type $LiMn_{1-x-z}Ni_zFe_xPO_4$.

Mais, comme cela est bien connu de l'homme de l'art, ces composés peuvent de plus être dopés par tout élément du tableau périodique des éléments qui est, évidemment, différent de M, de Q et de Fe.

En particulier, l'élément dopant peut être le bore ou l'aluminium ou les mélanges de ceux-ci.

N peut également représenter une lacune sur le site du lithium, de M, de Q, du phosphore ou de l'oxygène. En effet, une lacune sur un site de l'oxygène peut améliorer la diffusion des ions lithiums.

S'agissant d'un élément dopant, il est présent en très faible quantité dans le composé de la description, c'est-à-dire à une valeur inférieure à 15% en mol.

Divers précurseurs de lithium peuvent être utilisés tels qu'un hydroxyde de lithium, en particulier l'hydroxyde de lithium monohydrate $LiOH.H_2O$, un acétate de lithium tel que $LiOAc.2H_2O$, un chlorure de lithium LiCl, un nitrate de lithium $LiNO_3$, ou encore un hydrogénophosphate de lithium $LiH_2PO_4$.

De préférence, on utilise l'hydroxyde de lithium monohydrate.

Divers précurseurs de manganèse, de fer, de nickel et de cobalt peuvent également être utilisés, tels qu'un sulfate, un acétate, un oxalate, un chlorure, un hydroxyde ou un nitrate de ces composés.

Ainsi, pour le manganèse, des précurseurs de formules ($MnOAc_2.4H_2O$, $MnSO_4.H_2O$, $MnCl_2$, $MnCO_3$, $MnNO_3.4H_2O$, $Mn_x(PO_4)_y.H_2O$ dans laquelle x est compris entre 1 et 5 et y est compris entre 1 et 10, $Mn(OH)_z$) dans laquelle z est compris entre 2 et 4, peuvent être utilisés. De préférence, on utilisera un précurseur de manganèse qui est le sulfate de manganèse monohydrate $MnSO_4.H_2O$.

On utilise en tant que précurseur de fer, de préférence, le sulfate fer heptahydrate ($FeSO_4.7H_2O$).

On préférera utiliser, en tant que précurseur de nickel, le sulfate de nickel hexahydrate et, en tant que précurseur de cobalt, le sulfate de cobalt heptahydrate.

En tant que précurseur de phosphore, on pourra utiliser l'acide phosphorique, les mono- et dihydrogénophosphate d'ammonium et même l'hydrogénophosphate de lithium.

De préférence, on utilisera l'acide phosphorique.

Dans l'art antérieur, les synthèses des composés de formule I étaient effectuées en voie solide à haute température, c'est-à-dire à une température supérieure ou égale à 600°C, de telles températures étant nécessaires afin de permettre la décomposition des précurseurs de lithium, de manganèse, de phosphore, la réaction de formation complète du composé ainsi que l'évaporation totale des espèces volatiles.

Mais, bien qu'il soit difficile de préparer à basse température le composé de formule I électrochimiquement actif, les inventeurs ont découvert qu'une synthèse à basse température était nécessaire afin de limiter au maximum la croissance excessive des particules ou la formation d'agglomérats.

Ainsi, le procédé de l'invention utilise une méthode de synthèse en solution à une température de 160 °C, sous une pression comprise entre 0,5 et 50 bars pendant une durée inférieure à 60 minutes, en préférence une durée de 30 minutes, de préférence la synthèse est effectuée sous une pression de 3 bars pendant une durée de 30 minutes.

Cette synthèse est effectuée dans un réacteur chauffé par micro-ondes.

La puissance du four micro-ondes est fixée en fonction de la masse de l'échantillon à traiter mais la température du milieu réactionnel est maintenue dans l'intervalle de températures et pour une durée et sous une pression telles que définies ci-dessus.

La réaction a lieu dans un solvant aqueux, qui peut être uniquement constitué d'eau mais qui contient de préférence un composé glycol.

A titre de composé glycol utilisable, on peut citer l'éthylène glycol, le diéthylène glycol, le triéthylène glycol et le tétraethylène glycol, et les mélanges de ceux-ci.

Cependant, le diéthylène glycol s'est révélé particulièrement adapté.

Le milieu réactionnel de l'étape a) comprend de l'acide ascorbique afin d'éviter l'oxydation des ions fer II.

Entre 0,01% en poids et 0,5% en poids d'acide ascorbique, par rapport à la quantité de fer, sont utilisés.

Pour éliminer le solvant et les espèces non désirées telles que les sulfates et hydroxydes provenant des précurseurs, le produit obtenu après l'étape b) est simplement lavé à l'éthanol et à l'eau puis séché dans une étuve sous air à environ 50-60°C. Un lavage à l'éthanol suivi de deux lavages à l'eau se sont révélés suffisants.

Ainsi, contrairement à la synthèse en voie solide utilisée dans l'art antérieur pour synthétiser ce type de composé, il n'y a pas d'évaporation des espèces non désirées et des solvants dans un four à haute température.

En raison de la présence de groupements $PO_4^{3-}$, $P_2O_7^{4-}$, $PO_3^-$, les composés de formule I sont relativement isolants d'un point de vue électronique. C'est la raison pour laquelle un dépôt *in situ* (au cours de la synthèse) ou *ex situ* (étape de post-traitement) de carbone à la surface des particules des composés de formule I est nécessaire pour l'obtention de bonnes performances électriques. Le carbone permet d'augmenter la conductivité électronique mais aussi de limiter l'agglomération des particules sous l'effet de la température de synthèse. Dans l'art antérieur, ce dépôt de carbone est généralement effectué par décomposition thermique sous atmosphère réductrice d'une substance organique simultanément à la synthèse du composé de formule I.

Ainsi, la réaction de formation proprement dite du matériau composite de formule II a lieu lors du mélange du composé de formule I et du carbone. Le mélange est effectué, par exemple, par broyage dans un bol de 50ml en agate contenant 20 billes de 1cm de diamètre en agate mis en rotation à 500tr/min pendant 4h.

On préfère utiliser une forte proportion de carbone par rapport au composé de formule I.

De préférence on utilisera de 5 à 20% en poids de carbone à haute surface spécifique par rapport au poids du composé de formule I, plus préférablement 15% en poids.

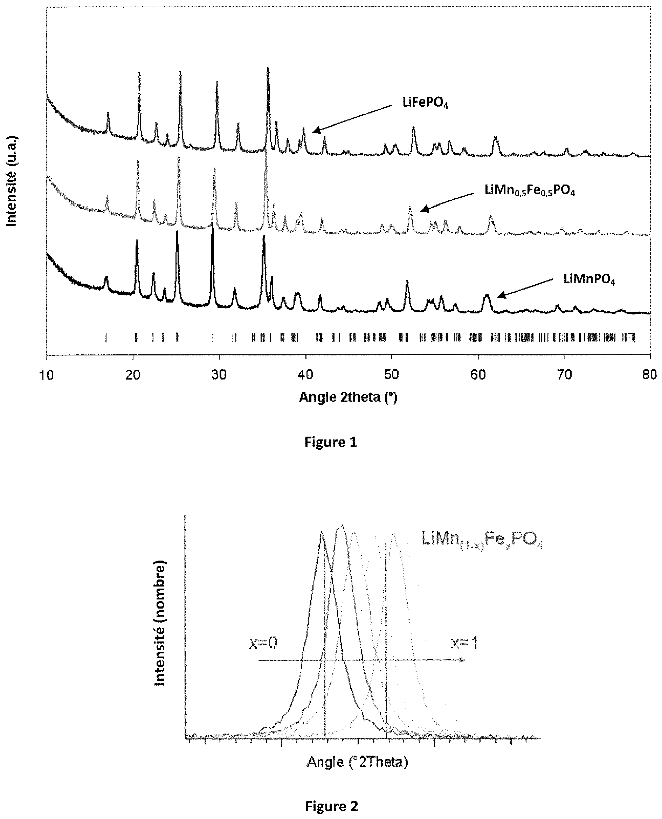

Le phosphate de manganèse, $LiMn_{1-x}Fe_xPO_4$, cristallise dans le groupe d'espace Pnma. Ce composé est de structure type olivine. Cette dernière consiste en un empilement hexagonal compact d'atomes d'oxygène. Les ions lithium, les ions manganèse et les ions fer sont localisés dans la moitié des sites octaédriques alors que le phosphore occupe 1/8 des sites tétraédriques. Une représentation simplifiée de la structure de $LiMn_{1-x}Fe_xPO_4$ est présentée dans l'encart de la figure 1. Cette figure présente également le diagramme de diffraction des rayons X des composés de formule $LiMnPO_4$ (hors invention), $LiMn_{0,5}Fe_{0,5}PO_4$ (invention) et $LiFePO_4$ (hors invention) préparés par le procédé de la description. Dans le cas du composé $LiMn_{1-x}Fe_xPO_4$, les paramètres de maille sont de l'ordre de 10,44 Å pour a, de 6.09 Å pour b et de 4,75Â pour c. Ces composés sont exempts d'impuretés.

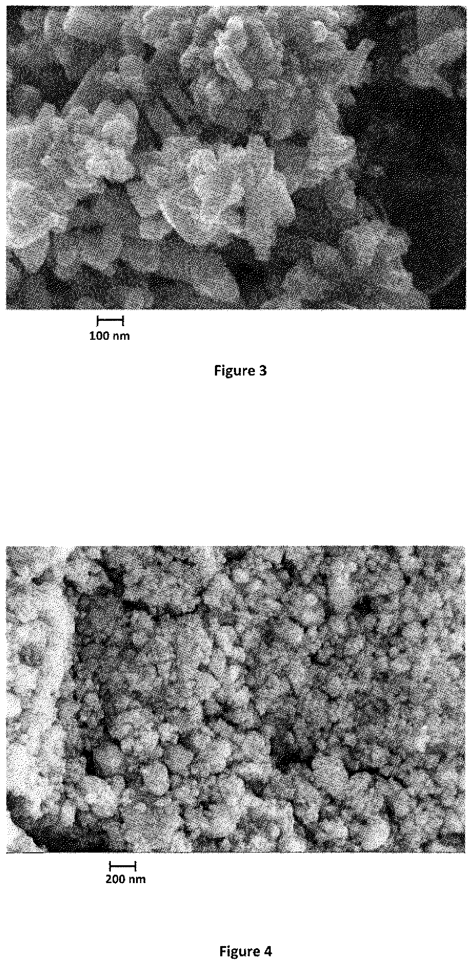

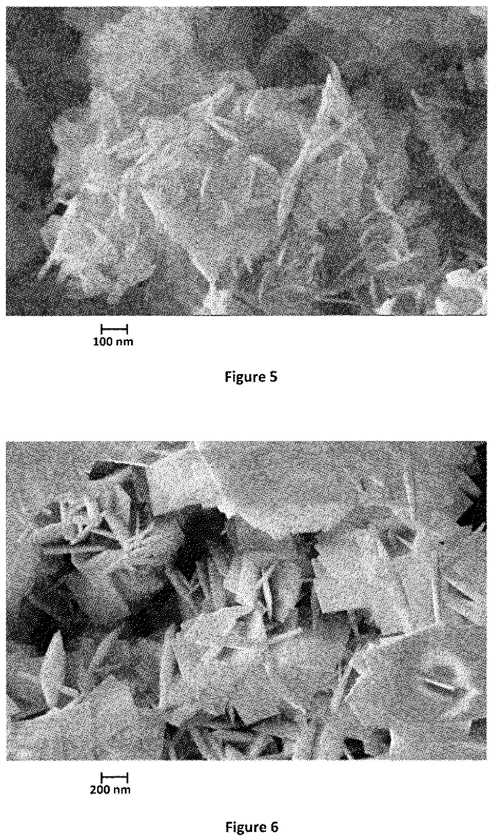

Les particules du composé de formule I obtenues par le procédé de la description ne sont pas ou peu agglomérées entre elles, comme le montrent les figures 3, 5 et 7 qui sont les images prises au microscope électronique à balayage (MEB-FEG) des composés de formule $LiMn_{0,5}Fe_{0,5}PO_4$ (figure 3, invention), $LiMnPO_4$ (figure 5, hors invention) et $LiFePO_4$ (figure 6, hors invention) préparés par le procédé de synthèse selon la description.

En outre, le procédé de synthèse des composés de formule I de la description à température faible conduit à une morphologie aplanie des particules qui ont une taille nanométrique, c'est-à-dire comme on le voit aux figures 3, 5 et 6, que les particules du composé de formule I ont la forme de plaquettes dont deux dimensions sont comprises entre 50 et 500 nm et dont l'épaisseur est comprise entre 1 et 100 nm.

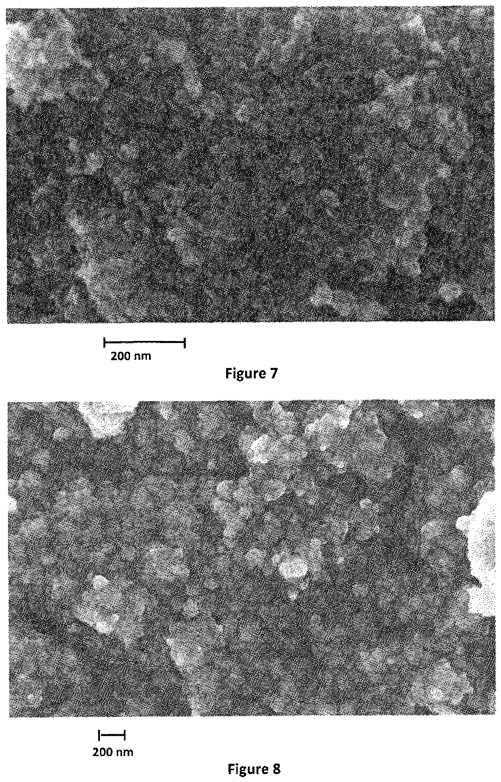

Le matériau composite de formule II obtenu à partir des composés de formule I préparés selon le procédé de la description, ont une morphologie sensiblement différente : le carbone a servi d'enrobage aux particules, et comme le montrent les figures 4, 6 et 8 qui représentent respectivement le matériau composite de formule II obtenu à partir du composé de formule I $LiMn_{0,5}$, $Fe_{0,5}$ (invention), lui, représenté en figure 3, le matériau composite de formule II obtenu à partir du composé de formule I lui-même représenté en figure 5, et le matériau composite de formule II obtenu à partir du composé de formule I lui-même représenté en figure 8, les matériaux composites de la description ont une forme de particules sphériques.

Les composés de formule I obtenus par le procédé de la description ont une surface spécifique élevée, supérieure ou égale à 15 $m^2/g$.

Le carbone utilisé pour obtenir le matériau composite de la description ayant une surface spécifique de préférence supérieure à 700 $m^2/g$, la surface spécifique du matériau composite obtenu avec les composés de formule I de la description, et par le procédé de la description, ont une surface spécifique supérieure ou égale à 80 $m^2/g$.

La surface spécifique est mesurée ici grâce à un isotherme d'adsorption d'azote à 77K à la surface du matériau (BET)

Le matériau composite de formule II de la description est avantageusement utilisé pour fabriquer une électrode positive d'un accumulateur au lithium.

Ces électrodes sont composées d'une dispersion du composite de formule II avec un liant organique conférant une tenue mécanique satisfaisante.

Cette électrode est également un objet de la description.

Les accumulateurs comprenant une telle électrode sont également un objet de la description.

De tels accumulateurs comprennent une électrode qui est l'objet de la description déposée sur une feuille métallique servant de collecteur de courant. Il s'agit de l'électrode positive.

Une autre électrode, ou électrode dite électrode négative est également déposée sur une feuille métallique.

Tout matériau connu de l'homme de l'art peut être utilisé pour former cette électrode négative.

Ce matériau peut être en particulier du carbone, du silicium, un composé du type $Li_4Ti_5O_{12}$, etc...

Les deux électrodes sont séparées par un séparateur mécanique. Ce séparateur est imbibé d'électrolyte qui sert de conducteur ionique.

Cet électrolyte est constitué d'un sel dont le cation est au moins en partie l'ion lithium et d'un solvant polaire aprotique.

En tant que sel dont le cation est au moins en partie l'ion $li^+$, on peut citer le $LiClO_4$, $LiAsF_6$, $LiPF_6$, $LiBF_4$, $LiR_FSO_3$, $LiCH_3SO_3$, $LiN(R_FSO_2)_2$, $LiC(R_FSO_2)_3$, LiTFSI, LiBOB, LiBETI.

On peut également utiliser en tant que solvant un liquide ionique tel que l'éthylméthylimidazolium TFSI, ou le butylméthylpyrrolydinium TFSI.

D'un point de vue pratique, l'électrode positive constituée majoritairement du composé de formule II C-$LiMn_{1-x-y-z}N_yQ_zFe_xPO_4$ de la description peut être formée par tout type de moyens connus. A titre d'exemple, le matériau peut être sous la forme d'une dispersion intime comportant, entre autres, le composite de formule II de la description et un liant organique. La dispersion est ensuite déposée sur une feuille métallique servant de collecteur de courant, par exemple de l'aluminium. Le liant organique, destiné à apporter une bonne conduction ionique et une tenue mécanique satisfaisante, peut, par exemple, être constitué d'un polymère choisi parmi les polymères à base de méthacrylate de méthyle, d'acrylonitrile, de fluorure de vinylidène, ainsi que les polyéthers ou les polyesters ou encore la carboxyméthyl-cellulose.

L'électrode négative de l'accumulateur Li-ion peut être constituée par tout type de matériau connu. L'électrode négative n'étant pas une source de lithium pour l'électrode positive, elle doit être constituée d'un matériau pouvant initialement accepter les ions lithium extrait de l'électrode positive, et les restituer par la suite. Par exemple, l'électrode négative peut être constituée de carbone, le plus souvent sous forme graphite, ou d'un matériau de structure spinelle tel que $Li_4Ti_5O_{12}$. Ainsi, dans un accumulateur Li-ion, le lithium ne se trouve jamais sous forme métallique. Ce sont des cations $Li^+$ qui font des aller-retours entre les deux matériaux d'insertion du lithium des électrodes négative et positive, à chaque charge et décharge de l'accumulateur. Les matériaux actifs des deux électrodes se trouvent généralement sous forme d'une dispersion intime du dit matériau d'insertion/extraction de lithium avec un additif conducteur électronique et éventuellement un liant organique tel que mentionné plus haut.

Finalement, l'électrolyte de l'accumulateur au lithium réalisé à partir du composé de formule I ou de formule II de la description est constitué par tout type de matériau connu. Il peut, par exemple, être constitué par un sel comportant au moins le cation $Li^+$. Le sel est, par exemple, choisi parmi $LiClO_4$, $LiAsF_6$, $LiPF_6$, $LiBF_4$, $LiR_FSO_3$, $LiCH_3SO_3$, $LiN(R_FSO_2)_2$, $LiC(R_FSO_2)_3$, LiTFSI, LiBOB, LiBETI. $R_F$ est choisi parmi un atome de fluor et un groupement perfluoroalkyle comportant entre un et huit atomes de carbone. LiTFSI est l'acronyme de lithium trifluorométhanesulphonylimide, LiBOB celui de lithium bis(oxalato)borate, et LiBETI celui de lithium bis(perfluoroéthylsulfonyl)imide. Le sel de lithium est, de préférence, dissous dans un solvant polaire aprotique et peut être supporté par un élément séparateur disposé entre les deux électrodes de l'accumulateur ; l'élément séparateur étant alors imbibé d'électrolyte. Dans le cas d'un accumulateur Li-ion à électrolyte polymère, le sel de lithium n'est pas dissous dans un solvant organique, mais dans un composite polymère solide tel que le POE (polyoxyde d'éthylène), le PAN (polyacrylonitrile), le PMMA (polyméthacrylate de méthyle), le PVdF (polyfluorure de vinylidène) ou un de leurs dérivés.

Afin de mieux faire comprendre l'invention, on va en décrire, à titre d'exemples purement illustratifs et non limitatifs plusieurs exemples de mise en oeuvre.

## Exemple 1

Des composés de formule I : $LiM_{1-x-y-z}N_yQ_zFe_xPO_4$ dans lesquels x = 0,2 (invention); 0,4 (invention); 0,5 (invention); 0,6 (invention); 0,8 (hors invention) et 1 (hors invention) ont été synthétisés.

Le mode opératoire utilisé était identique à celui qui est décrit ci-dessous pour la synthèse de $LiMn_{0,5}Fe_{0,5}PO_4$ (invention), seules les quantités de sulfate de fer heptahydrate et de sulfate de manganèse monohydrate étant modifiées pour correspondre à la stoechiométrie voulue.

1. Synthèse de $LiMn_{0,5}Fe_{0,5}PO_4$ (invention)

0,695g de sulfate de fer heptahydrate (FeSO4.7H2O) et 0,423g du sulfate de manganèse monohydrate (MnSO4.H2O) sont dissous dans 10mL d'eau distillée contenant 65mg d'acide ascorbique (soit une concentration en fer et manganèse de 0,05mol/L). 0,33mL de solution aqueuse d'acide phosphorique ($H_3PO_4$) à 85% est ajouté sous agitation magnétique puis 0,63g d'hydroxyde de lithium monohydrate ($LiOH.H_2O$ soit 3 équivalents). Un précipité se forme alors rapidement dès le début de l'ajout du sel de lithium. Après ajout de 40mL de diéthylène glycol, la suspension est ensuite introduite dans un réacteur étanche de 100mL adapté aux micro-ondes et traité à 160°C pendant 30 minutes dans four CEM (puissance de 400W). La solution finale (incolore) contient un précipité de couleur beige. Ce dernier est lavé à l'éthanol et à l'eau, centrifugé et séché 24h à 60°C. La poudre récupérée, de couleur beige, a pour composition $LiMn_{0,5}Fe_{0,5}PO_4$.

La figure 1 montre le diagramme de diffraction X du composé de formule I ainsi que le diagramme de diffraction X des composés de formule I $LiMnPO_4$ (hors invention) et $LiFePO_4$ (hors invention) obtenus de la même façon.

La figure 2 montre le déplacement du pic principal des composés synthétisés à l'exemple 1.

Les traits verticaux correspondent aux positions de Bragg calculées pour le groupe d'espace Pnma, et pour les paramètres de maille a - 10,44 Å ; b - 6,09 Å et c - 4,75 Â. En insert de la figure 1, la structure cristalline de $LiMnPO_4$ dans le plan (a, b) est représentée ; l'axe c étant perpendiculaire au plan de la figure.

Les ions lithium sont schématisés par des cercles, les octaèdres correspondent au manganèse ($MnO_6$) et les tétraèdres au phosphore ($PO_4$).

Le figure 3 montre l'image obtenue par microscope électronique à balayage du composé de formule I $LiMn_{0,5}Fe_{0,5}PO_4$ (invention), la figure 5 montre l'image obtenue par microscope électronique à balayage du composé de formule I $LiMnFePO_4$ (hors invention), et la figure 7 montre l'image obtenue par microscope électronique à balayage du composé de formule I $LiFePO_4$ (hors invention).

2. Synthèse du composite C-composé de formule I.

500mg de poudre de composé de formule I obtenu en 1. ci-dessus est introduit dans un bol de broyage en agate contenant 88mg de carbone amorphe Ketjen Black EC600J.

Ce carbone a une surface spécifique de 1300m$^2$/g.

Le mélange est broyé pendant 4 heures à 500tr/min.

Le composite C-LiMn$_{0,5}$Fe$_{0,5}$PO$_4$ (invention) est montré en figure 4 alors que le composite C-LiMnFePO$_4$ (hors invention) est montré en figure 6 et le matériau composite C-LiFePO$_4$ (hors invention) est montré en figure 8.

**Exemple 2**

Un accumulateur au lithium de format "pile bouton" est assemblé avec

- une électrode négative de lithium (16 mm de diamètre, 130 $\mu$m d'épaisseur) déposée sur un disque de nickel servant de collecteur de courant,
- une électrode positive constituée d'un disque de 14 mm de diamètre prélevée sur un film composite de 25 $\mu$m d'épaisseur comprenant le matériau de l'invention préparé selon l'exemple 1 (90 % en masse) et du fluorure de polyvinylidène (10 % en masse) en guise de liant, le tout étant déposé sur un collecteur de courant en aluminium (feuille de 20 micromètres d'épaisseur), et
- un séparateur imbibé d'un l'électrolyte liquide à base du sel LiPF$_6$ (1 mol/L) en solution dans un mélange de carbonate de propylène et de carbonate de diméthyle.

Cet accumulateur a été testé à 20°C, sous un régime de C/10.

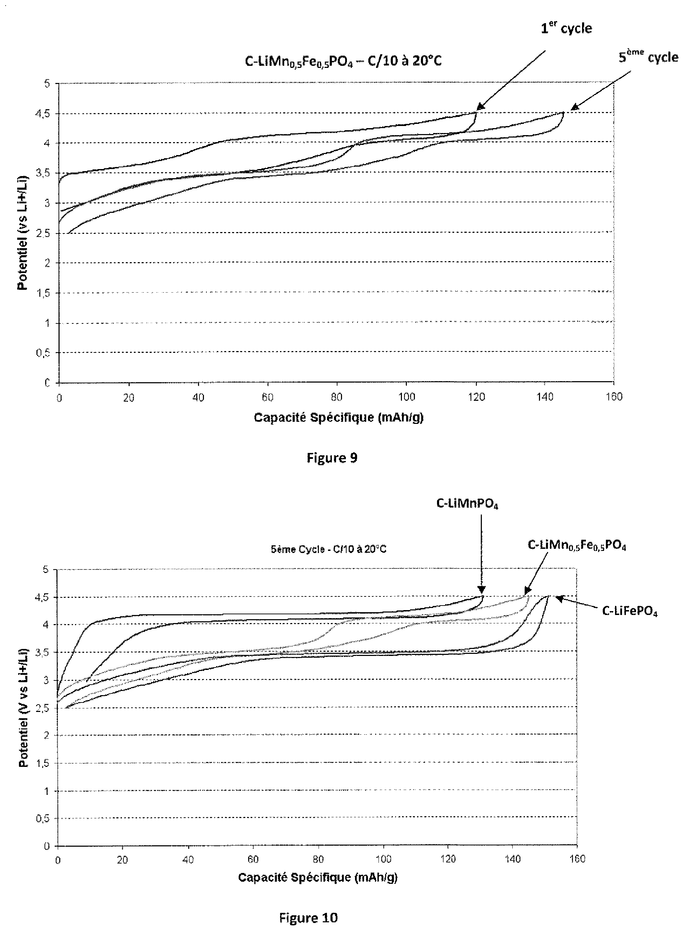

Comme le montre la figure 9, qui présente les courbes en cyclages des premier et cinquième cycles obtenus lorsque l'électrode positive était fabriquée à partir du matériau composite de formule II C-LiMn$_{0,5}$Fe$_{0,5}$PO$_4$ (invention), la majeure partie du lithium présent est extraite.

Cela est également le cas pour les accumulateurs dont l'électrode positive était fabriquée à partir des matériaux composites obtenus par les procédés de l'invention, de formule II, C-LiMnFePO$_4$ (hors invention), C-LiMn$_{0,5}$Fe$_{0,5}$PO$_4$ (invention) et C-LiFePO$_4$ (hors invention), comme le montre la figure 10 qui présente les courbes de cyclage du cinquième cycle de ces piles boutons.

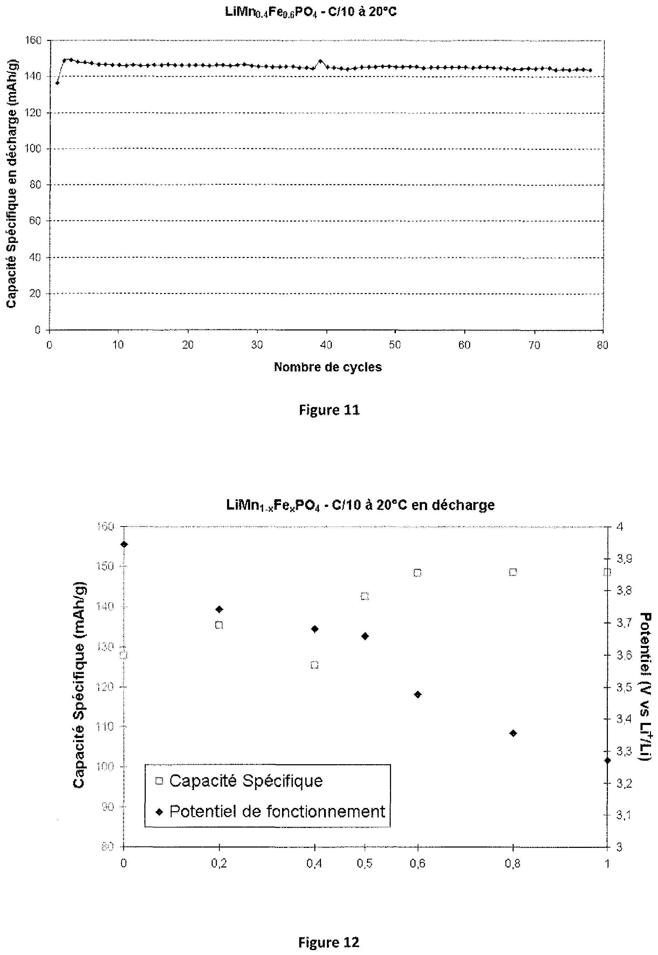

Le comportement en cyclage de l'accumulateur obtenu avec le matériau composite C-LiMn$_{0,5}$Fe$_{0,5}$PO$_4$ (invention) à 20°C est montré en figure 11 qui représente l'évolution de la capacité spécifique en décharge de ce matériau composite, en fonction du nombre de cycles à un régime de C/10 à 20°C et 55°C, entre 2,5 et 4,5.

Comme on le voit en figure 11, la capacité spécifique du matériau est d'environ 150mAh/g et reste stable sur 80cycles.

Comme on le voit en figure 12, qui montre l'évolution du potentiel de fonctionnement et de la capacité spécifique en décharge à un régime de C/10 à 20°C des matériaux composites de formule II C-LiMn$_{1-x}$Fe$_x$PO$_4$ (invention), selon l'invention, en fonction de la valeur de x. Il apparait que lorsque la teneur en manganèse augmente, le potentiel de fonctionnement moyen du matériau augmente au détriment des performances électrochimiques. En effet, la perte de conductivité globale du matériau à forte teneur en manganèse conduit à une chute de la capacité spécifique.

**Revendications**

1. Procédé de fabrication d'un composé de formule I suivante :

$$LiM_{1-x-y-z}N_yQ_zFe_xPO_4 \qquad \text{formule I}$$

dans laquelle :

- M est un élément de transition choisi parmi Co, Ni et Mn,
- N est un élément dopant différent de M et Q, de préférence un élément dopant choisi par le bore, l'aluminium, et leurs mélanges, et/ou une lacune sur les sites du lithium et/ou de M et/ou de Q et/ou de P et/ou de O,
- Q est un élément de transition choisi parmi Co, Ni, Mn et Fe mais différent de M,

$$0,2 \leq x \leq 0,6,$$

$$0 \leq y \leq 0,15,$$

$$z = 0,$$

et

$$0 < x + y + z < 1,$$

**caractérisé en ce que** le composé de formule I a une surface spécifique supérieure ou égale à 15 m$^2$/g, et en qu'il comprend les étapes suivantes :

a) mélange des précurseurs de Li, M, N, Fe, P et d'acide ascorbique dans un solvant aqueux, de préférence contenant un composé glycol, préférablement contenant de l'éthylène glycol et/ou du diéthylène glycol et/ou du triéthylène glycol et/ou du tétraéthylène glycol,
b) chauffage par micro-ondes du mélange obtenu à l'étape a) à une température de 160°C et sous une pression comprise entre 0,5 et 50 bars, de préférence une pression de 3 bars, pendant une durée comprise entre 1 et 60 minutes, de préférence une durée de 30 minutes, et
c) lavages à l'éthanol et à l'eau du produit obtenu à l'étape b).

2. Procédé selon la revendication 1, **caractérisé en ce que**, à l'étape a), le solvant aqueux comprend un composé glycol et **en ce que** le rapport en volume eau/composé glycol est compris entre 9 et 1/9, de préférence est égal à 1/4.

3. Procédé selon la revendication 1 ou 2, **caractérisé en ce que**, à l'étape a), la quantité d'acide ascorbique est comprise entre 0,01 et 0,5 % en poids, par rapport à la quantité de Fe.

4. Procédé selon l'une quelconque des revendications précédentes, **caractérisé en ce que**, à l'étape a), le précurseur de Li est choisi parmi un hydroxyde, un acétate, un nitrate, un chlorure, un hydrogénophosphate de lithium, de préférence est l'hydroxyde de lithium monohydrate.

5. Procédé selon l'une quelconque des revendications précédentes, **caractérisé en ce qu'**à l'étape a), les précurseurs de Mn, Fe, Ni et Co sont choisis parmi un sulfate, un acétate, un oxalate, un chlorure, un hydroxyde et un nitrate de respectivement Mn, Fe, Ni et Co, de préférence le précurseur de Fe est du sulfate de fer heptahydrate (FeSO$_4$.7H$_2$O), le précurseur de manganèse est le sulfate de manganèse monohydrate (MnSO$_4$.H$_2$O), le précurseur de Ni est le sulfate de nickel hexahydrate, le précurseur de Co est le sulfate de cobalt heptahydrate.

6. Procédé selon l'une quelconque des revendications précédentes, **caractérisé en ce qu'**à l'étape b), le précurseur de phosphore est choisi parmi l'acide phosphorique (H$_3$PO$_4$), l'hydrogénophosphate de diamonium ((NH$_4$)$_2$HPO$_4$), le dihydrogénophosphate d'ammonium (NH$_4$H$_2$PO$_4$), de préférence est l'acide phosphorique (H$_3$PO$_4$).

7. Procédé selon l'une quelconque des revendications précédentes, **caractérisé en ce que**, à l'étape a), on mélange les précurseurs de M, N, Q, Fe et P en les quantités stoechiométriques de M, N, Q, Fe et P voulues dans le composé de formule I final et le précurseur de Li en une quantité de Li supérieure à la quantité stoechiométrique, de préférence une quantité de Li 3 fois supérieure, en équivalents en moles, de Li voulue dans le composé de formule I final.

8. Procédé de fabrication d'un matériau composite de formule II suivante :

C - LiM$_{1-x-y-z}$N$_y$Q$_z$Fe$_x$PO$_4$           formule II

dans laquelle :

- M est un élément de transition choisi parmi Co, Ni et Mn,
- N est un élément dopant différent de M et Q, de préférence un élément dopant choisi parmi le bore, l'aluminium, et leurs mélanges, et/ou une lacune sur les sites du lithium et/ou de M et/ou de P et/ou de O,
- Q est un élément de transition choisi parmi Co, Ni, Mn et Fe mais différent de M,

$$0{,}2 \leq x \leq 0{,}6,$$

$$0 \leq y \leq 0{,}15,$$

$$z = 0,$$

et

$$0 < x + y + z < 1,$$

**caractérisé en ce qu'**il comprend les étapes suivantes :

a) mélange des précurseurs de Li, M, N, Fe, P et d'acide ascorbique dans un solvant aqueux contenant de préférence un composé glycol, plus préférablement contenant de l'éthylène glycol, et/ou du diéthylène glycol, et/ou du triéthylène glycol, et/ou du tétraéthylène glycol,

b) chauffage par micro-ondes du mélange obtenu à l'étape a) à une température de 160°C et sous une pression comprise entre 0,5 et 50 bars, de préférence une pression de 3 bars, pendant une durée comprise entre 1 et 60 minutes, de préférence une durée de 30 minutes,

c) lavages à l'éthanol et à l'eau du produit obtenu à l'étape b), et

d) mélange du composé ainsi obtenu avec du carbone en poudre ayant une surface spécifique supérieure à 700m$^2$/g.

9. Composé de formule I suivante :

$$\text{LiM}_{1-x-y-z}\text{N}_y\text{Q}_z\text{Fe}_x\text{PO}_4 \qquad \text{formule I}$$

dans laquelle :

- M est un élément de transition choisi parmi Co, Ni et Mn,
- N est un élément dopant différent de M et Q, de préférence un élément dopant choisi par le bore, l'aluminium, et leurs mélanges, et/ou une lacune sur les sites du lithium et/ou de M et/ou de Q et/ou de P et/ou de O,
- Q est un élément de transition choisi parmi Co, Ni, Mn et Fe mais différent de M,

$$0{,}2 \leq x \leq 0{,}6,$$

$$0 \leq y \leq 0{,}15,$$

$$z = 0,$$

et

$$0 < x + y + z < 1,$$

obtenu par le procédé selon l'une quelconque des revendications 1 à 7 et ayant une surface spécifique supérieure ou égale à 15 m$^2$/g, et ayant la forme de plaquettes dont deux dimensions sont comprises entre 20 nm et 500 nm et dont l'épaisseur est comprise entre 1 et 100 nm.

10. Matériau composite de formule II suivante :

$$\text{C - LiM}_{1-x-y-z}\text{N}_y\text{Q}_z\text{Fe}_x\text{PO}_4 \qquad \text{formule II}$$

dans laquelle :

- M est un élément de transition choisi parmi Co, Ni et Mn,
- N est un élément dopant différent de M et Q, de préférence un élément dopant choisi parmi le bore, l'aluminium, et leurs mélanges, et/ou une lacune sur les sites du lithium et/ou de M et/ou de P et/ou de O,
- Q est un élément de transition choisi parmi Co, Ni, Mn et Fe mais différent de M,

$$0,2 \leq x \leq 0,6,$$

$$0 \leq y \leq 0,15,$$

$$z = 0,$$

et

$$0 < x + y + z < 1,$$

comprenant un composé de formule I selon la revendication 9 et du carbone et ayant une surface spécifique supérieure ou égale à 80m$^2$/g.

**11.** Electrode **caractérisée en ce qu'**elle comprend un composé de formule I selon la revendication 9 et/ou un matériau composite de formule II selon la revendication 10.

**12.** Accumulateur Li-ion **caractérisé en ce qu'**il comprend une électrode selon la revendication 11.

**Patentansprüche**

**1.** Verfahren zur Herstellung einer Verbindung der folgenden Formel I:

$$\text{LiM}_{1-x-y-z}\text{N}_y\text{Q}_z\text{Fe}_x\text{PO}_4 \qquad \text{Formel I}$$

in der:

- M ein Übergangselement ist, das aus Co, Ni und Mn ausgewählt ist,
- N ein Dotierungselement ist, das sich von M und Q unterscheidet, bevorzugt ein Dotierungselement, das aus Bor, Aluminium und deren Mischungen ausgewählt ist, und/oder eine Lücke an den Lithium- und/oder M- und/oder Q- und/oder P- und/oder O-Stellen,
- Q. ein Übergangselement ist, das aus Co, Ni, Mn und Fe ausgewählt ist, aber von M unterschiedlich ist,
-

$$0,2 \leq x \leq 0,6,$$

-

$$0 \leq y \leq 0,15,$$

-

$$z = 0,$$

und

-

$$0 < x + y + z < 1,$$

**dadurch gekennzeichnet, dass** die Verbindung der Formel ! eine spezifische Oberfläche größer oder gleich 15 $m^2/g$ aufweist, und dass sie die folgenden Schritte umfasst:

  a) Mischen der Vorläufer von Li, M, N, Fe, P und Ascorbinsäure in einem wässrigen Lösungsmittel, das bevorzugt eine Glycolzusammensetzung, bevorzugt Ethylenglycol und/oder Diethylenglycol und/oder Triethylenglycol und/oder Tetraethylenglycol enthält,
  b) Erhitzen durch Mikrowellen der bei Schritt a) erhaltenen Mischung auf eine Temperatur von 160 °C und unter einem Druck zwischen 0,5 und 50 bar, bevorzugt einem Druck von 3 bar, während einer Dauer zwischen 1 und 60 Minuten, bevorzugt einer Dauer von 30 Minuten, und
  c) Wäschen des bei Schritt b) erhaltenen Produkts mit Ethanol oder Wasser.

2. Verfahren nach Anspruch 1, **dadurch gekennzeichnet, dass** bei Schritt a) das wässrige Lösungsmittel eine Glycolverbindung umfasst, und dass das Verhältnis zwischen Wasservolumen/Glycolverbindung zwischen 9 und 1/9 beträgt, bevorzugt gleich 1/4 ist.

3. Verfahren nach Anspruch 1 oder 2, **dadurch gekennzeichnet, dass** bei Schritt a) die Menge an Ascorbinsäure zwischen 0,01 und 0,5 Gew.-%, bezogen auf die Fe-Menge, liegt.

4. Verfahren nach einem der vorstehenden Ansprüche, **dadurch gekennzeichnet, dass** bei Schritt a) der Vorläufer von Li aus einem Lithiumhydroxid, -acetat, -nitrat, -chlorid, - hydrogenphosphat ausgewählt ist, bevorzugt Lithiumhydroxidmonohydrat ist.

5. Verfahren nach einem der vorstehenden Ansprüche, **dadurch gekennzeichnet, dass** bei Schritt a) die Vorläufer von Mn, Fe, Ni und Co aus einem Sulfat, einem Acetat, einem Oxalat, einem Chlorid, einem Hydroxid und einem Nitrat jeweils von Mn, Fe, Ni et Co ausgewählt sind, der Vorläufer von Fe bevorzugt Eisensulfat-Heptahydrat ($FeSO_4.7H_2O$) ist, der Vorläufer von Mangan Mangansulfatmonohydrat ($MnSO_4.H_2O$) ist, der Vorläufer von Ni Nickelsulfathexahydrat ist, der Vorläufer von Co Kobaltsulfatheptahydrat ist.

6. Verfahren nach einem der vorstehenden Ansprüche, **dadurch gekennzeichnet, dass** bei Schritt b) der Vorläufer von Phosphor ausgewählt ist aus Phosphorsäure ($H_3PO_4$), Diammoniumhydrogenphosphat (($NH_4)_2HPO_4$), Ammoniumdihydrogenphosphat ($NH_4H_2PO_4$), bevorzugt Phosphorsäure ($H_3PO_4$) ist.

7. Verfahren nach einem der vorstehenden Ansprüche, **dadurch gekennzeichnet, dass** bei Schritt a) die Vorläufer von M, N, Q, Fe und P in den gewünschten stöchiometrischen Mengen von M, N, Q, Fe und P in der Verbindung der endgültigen Formel ! und der Vorläufer von Li in einer Li-Menge größer als die stöchiometrische Menge, bevorzugt eine Menge von Li, die 3 Mal größer ist, in Moläquivalenten, von Li, die in der endgültigen Verbindung der Formel ! gewünscht wird, gemischt werden.

8. Verfahren zur Herstellung eines Verbundmaterials mit der folgenden Formel II:

$$C - LiM_{1-x-y-z}N_yQ_zFe_xPO_4 \qquad \text{Formel II}$$

in der:

  - M ein Übergangselement ist, das aus Co, Ni und Mn ausgewählt ist,
  - N ein Dotierungselement ist, das sich von M und Q unterscheidet, bevorzugt ein Dotierungselement, das aus Bor, Aluminium und deren Mischungen ausgewählt ist, und/oder eine Lücke an den Lithium- und/oder M- und/oder P- und/oder O-Stellen,
  - Q. ein Übergangselement ist, das aus Co, Ni, Mn und Fe ausgewählt ist, aber von M unterschiedlich ist,
  -

$$0{,}2 \leq x \leq 0{,}6,$$

-

$$0 \leq y \leq 0{,}15,$$

-

$$z = 0,$$

und

-

$$0 < x + y + z < 1,$$

**dadurch gekennzeichnet, dass** es die folgenden Schritte umfasst:

a) Mischen der Vorläufer von Li, M, N, Fe, P und Ascorbinsäure in einem wässrigen Lösungsmittel, das bevorzugt eine Glycolzusammensetzung, bevorzugter Ethylenglycol und/oder Diethylenglycol und/oder Triethylenglycol und/oder Tetraethylenglycol enthält,

b) Erhitzen durch Mikrowellen der bei Schritt a) erhaltenen Mischung auf eine Temperatur von 160 °C und unter einem Druck zwischen 0,5 und 50 bar, bevorzugt einem Druck von 3 bar, während einer Dauer zwischen 1 und 60 Minuten, bevorzugt einer Dauer von 30 Minuten,

c) Wäschen des bei Schritt b) erhaltenen Produkts mit Ethanol oder Wasser, und

d) Mischen der derart erhaltenen Verbindung mit pulverförmigem Kohlenstoff, der eine spezifische Oberfläche größer als 700 $m^2$/g aufweist.

**9.** Verbindung mit der folgenden Formel I:

$$LiM_{1-x-y-z}N_yC_zFe_xPO_4 \qquad \text{Formel I}$$

in der:

- M ein Übergangselement ist, das aus Co, Ni und Mn ausgewählt ist,

- N ein Dotierungselement ist, das sich von M und Q unterscheidet, bevorzugt ein Dotierungselement, das aus Bor, Aluminium und deren Mischungen ausgewählt ist, und/oder eine Lücke an den Lithium- und/oder M- und/oder Q- und/oder P- und/oder O-Stellen,

- Q. ein Übergangselement ist, das aus Co, Ni, Mn und Fe ausgewählt ist, aber von M unterschiedlich ist,

-

$$0{,}2 \leq x \leq 0{,}6,$$

-

$$0 \leq y \leq 0{,}15,$$

-

$$z = 0,$$

und

-

$$0 < x + y + z < 1,$$

das durch das Verfahren nach einem der Ansprüche 1 bis 7 erhalten wird und eine spezifische Oberfläche von 15 $m^2/g$ oder mehr aufweist, und die Form von Plättchen aufweist, von denen zwei Abmessungen zwischen 20 nm und 500 nm liegen und die eine Dicke zwischen 1 und 100 nm aufweisen.

10. Verbundmaterial mit der folgenden Formel II:

$$C - LiM_{1-x-y-z}N_yQ_zFe_xPO_4 \qquad Formel\ II$$

in der:

- M ein Übergangselement ist, das aus Co, Ni und Mn ausgewählt ist,
- N ein Dotierungselement ist, das sich von M und Q unterscheidet, bevorzugt ein Dotierungselement, das aus Bor, Aluminium und deren Mischungen ausgewählt ist, und/oder eine Lücke an den Lithium- und/oder M- und/oder P- und/oder O-Stellen,
- Q. ein Übergangselement ist, das aus Co, Ni, Mn und Fe ausgewählt ist, aber von M unterschiedlich ist,
-

$$0,2 \leq x \leq 0,6,$$

-

$$0 \leq y \leq 0,15,$$

-

$$z = 0,$$

und

-

$$0 < x + y + z < 1,$$

das eine Verbindung mit der Formel ! nach Anspruch 9 und Kohlenstoff umfasst und eine spezifische Oberfläche größer oder gleich 80 $m^2/g$ aufweist.

11. Elektrode, **dadurch gekennzeichnet, dass** sie eine Verbindung mit der Formel ! nach Anspruch 9 und/oder ein Verbundmaterial mit der Formel II nach Anspruch 10 umfasst.

12. Li-ion-Akkumulator, **dadurch gekennzeichnet, dass** er eine Elektrode nach Anspruch 11 umfasst.

**Claims**

1. A method for producing a compound of the following formula I :

$$LiM_{1-x-y-z}N_yQ_zFe_xPO_4 \qquad Formula\ I$$

wherein:

- M is a transition element selected from Co, Ni and Mn,
- N is a doping element different from M and Q, preferably a doping element selected from boron, aluminium and mixtures thereof, and/or a deficiency on the sites of lithium and/or M and/or Q. and/or P and/or O,
- Q is a transition element selected from Co, Ni, Mn and Fe but different from M,
- $0.2 \leq x \leq 0.6$,
- $0 \leq y \leq 0.15$,
- $z = 0$, and
- $0 \leq x + y + z < 1$,

**characterised in that** the compound of formula I has a specific surface area greater than or equal to $15 m^2/g$, and **in that** it comprises the following steps:

a) mixing precursors of Li, M, N, Fe, P and ascorbic acid in an aqueous solvent, preferably containing a glycol compound, preferably containing ethylene glycol and/or diethylene glycol and/or triethylene glycol and/or tetraethylene glycol,
b) microwave heating the mixture obtained in step a) at a temperature of 160°C and a pressure of between 0.5 and 50 bars, preferably 3 bars, for a period of between 1 and 60 minutes, preferably 30 minutes, and
c) washing the product with ethanol and water obtained in step b).

2. The method according to claim 1, **characterized in that**, in step a), the aqueous solvent comprises a glycol compound and **in that** the water/glycol compound volume ratio is between 9 and 1/9, preferably equal to 1/4.

3. The method according to claim 1 or 2, **characterized in that**, in step a), the amount of ascorbic acid is between 0.01 and 0.5% by weight, relative to the amount of Fe.

4. The method according to any one of the preceding claims, **characterized in that**, in step a), the Li precursor is selected from a lithium hydroxide, acetate, nitrate, chloride or hydrogen phosphate, preferably lithium hydroxide monohydrate.

5. The method according to any one of the preceding claims, **characterized in that**, in step a), the Mn, Fe, Ni and Co precursors are selected from a sulphate, an acetate, an oxalate, a chloride, a hydroxide and a nitrate of Mn, Fe, Ni and Co respectively, preferably the Fe precursor is iron sulphate heptahydrate($FeSO_4.7H_2O$), the manganese precursor is manganese sulphate monohydrate ($MnSO_4.H_2O$), the Ni precursor is nickel sulphate hexahydrate, the Co precursor is cobalt sulphate heptahydrate.

6. The method according to any one of the preceding claims, **characterized in that**, in step b), the phosphorus precursor is selected from phosphoric acid ($H_3PO_4$), diamonium hydrogen phosphate ($(NH_4)_2HPO_4$) and ammonium dihydrogen phosphate ($NH_4H_2PO_4$), preferably phosphoric acid ($H_3PO_4$).

7. The method according to any one of the preceding claims, **characterised in that**, in step a), the precursors of M, N, Q, Fe and P are mixed in the desired stoichiometric amounts of M, N, Q, Fe and P in the final compound of formula I and the precursor of Li is mixed in an amount of Li greater than the stoichiometric amount, preferably a 3-fold molar equivalent amount of Li, desired in the final compound of formula !.

8. The method for producing a composite material of the following formula II :

$$C\text{-}LiM_{1-x-y-z}N_yQ_zFe_xPO_4 \qquad \text{formula II}$$

wherein:

- M is a transition element selected from Co, Ni and Mn,
- N is a doping element different from M and Q, preferably a doping element selected from boron, aluminium and mixtures thereof, and/or a deficiency on the sites of lithium and/or M and/or P and/or O,
- Q is a transition element selected from Co, Ni, Mn and Fe but different from M,
-

$$0.2 \leq x \leq 0.6,$$

-

$$0 \le y \le 0.15,$$

-

$$z = 0,$$

and

-

$$0 < x + y + z < 1,$$

**characterised in that** it comprises the following steps:

a) mixing precursors of Li, M, N, Fe, P and ascorbic acid in an aqueous solvent preferably containing a glycol compound, more preferably containing ethylene glycol, and/or diethylene glycol, and/or triethylene glycol, and/or tetraethylene glycol,
b) microwave heating the mixture obtained in step a) at a temperature of 160°C and under a pressure of between 0.5 and 50 bars, preferably 3 bars, for a period of between 1 and 60 minutes, preferably 30 minutes,
c) washing the product with ethanol and water obtained in step b), and
d) mixing the compound thus obtained with powdered carbon having a specific surface area greater than $700 m^2/g$.

9. A compound of the following formula I :

$$LiM_{1-x-y-z}N_yQ_zFe_xPO_4 \qquad \text{Formula I}$$

wherein:

- M is a transition element selected from Co, Ni and Mn,
- N is a doping element different from M and Q, preferably a doping element selected from boron, aluminium and mixtures thereof, and/or a deficiency on the sites of lithium and/or M and/or Q and/or P and/or O,
- Q is a transition element selected from Co, Ni, Mn and Fe but different from M,
-

$$0.2 \le x \le 0.6,$$

-

$$0 \le y \le 0.15,$$

-

$$z = 0,$$

and

-

$$0 < x + y + z < 1,$$

obtained by the method according to any one of claims 1 to 7 and having a specific surface area greater than or equal to $15 m^2/g$ and having the form of platelets two dimensions of which are between 20 nm and 500 nm and the thickness of which is between 1 and 100 nm.

**10.** A composite material of the following formula II :

$$C\text{-}LiM_{1-x-y-z}N_yQ_zFe_xPO_4 \qquad \text{formula II}$$

wherein:

- M is a transition element selected from Co, Ni and Mn,
- N is a doping element different from M and Q, preferably a doping element selected from boron, aluminium and mixtures thereof, and/or a deficiency on the sites of lithium and/or M and/or P and/or O,
- Q is a transition element selected from Co, Ni, Mn and Fe but different from M,
-

$$0.2 \leq x \leq 0.6,$$

-

$$0 \leq y \leq 0.15,$$

-

$$z = 0,$$

and
-

$$0 < x + y + z < 1,$$

comprising a compound of formula I according to claim 9 and carbon and having a specific surface area greater than or equal to $80 m^2/g$.

**11.** An electrode **characterised in that** it comprises a compound of formula I according to claim 9 and/or a composite material of formula II according to claim 10.

**12.** A Li-ion battery **characterised in that** it comprises an electrode according to claim 11.

Figure 1

Figure 2

100 nm

Figure 3

200 nm

Figure 4

100 nm

Figure 5

200 nm

Figure 6

200 nm

Figure 7

200 nm

Figure 8

Figure 9

Figure 10

LiMn$_{0,4}$Fe$_{0,6}$PO$_4$ - C/10 à 20°C

Figure 11

LiMn$_{1-x}$Fe$_x$PO$_4$ - C/10 à 20°C en décharge

Figure 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 102838102
- US 2012021288 A
- WO 2012147766 A
- US 2009117020 A

**Littérature non-brevet citée dans la description**

- **HONGMEI et al.** *Electrochimica Acta,* 2011, vol. 56 (9), 3093-3100
- **MINDONG CHEN et al.** *Ionics,* 2012, vol. 18 (6), 541-547
- **CHEN et al.** *Solid State Ionics,* 2007, vol. 178 (31-32), 1676-1693